# EUROPEAN PATENT SPECIFICATION

(11) **EP 1 073 051 B1**
(45) Date of publication and mention of the grant of the patent: **07.07.2004**
(21) Application number: 00116408.6
(22) Date of filing: 28.07.2000
(51) Int. Cl.: G11B 20/10, G11B 20/00, G06F 1/00

(54) **Signal processing apparatus and method and information recording medium to be used therein**
Signalverarbeitungsgerät und -verfahren und Informationsaufzeichnungsmedium zum Gebrauch darin
Appareil et méthode de traitement de signal et support d'enregistrement d'information utilisé pour cela

(30) Priority: 29.07.1999 JP 21474499
(43) Date of publication of application: 31.01.2001
(73) Proprietor: Pioneer Corporation, Meguro-ku, Tokyo (JP)
(72) Inventor: Katata, Keiji, c/o Tokorozawa Koujou, Tokorozawa-shi, Saitama-ken 359-8522 (JP)
(74) Representative: Bohnenberger, Johannes, Dr.

(56) References cited:
- EP-A- 0 583 140
- EP-A- 0 598 587
- EP-A- 0 768 601
- WO-A-98/11690
- US-A- 4 847 902
- US-A- 5 943 421

## Description

### BACKGROUND OF THE INVENTION

### FIELD OF THE INVENTION

The present invention relates to a signal processing technique for decrypting encrypted contents, such as video data, audio data or a computer program, and, more particularly, to a signal processing technique capable of inhibiting unauthorized processing of such encrypted contents.

### DESCRIPTION OF THE RELATED ART

To prevent a third party from illegitimately using contents recorded on information recording media, such as a CD (Compact Disc) and DVD (Digital Video Disc or Digital Versatile Disc), contents are generally recorded on each information recording medium in an encrypted manner.

Conventionally, decrypting encrypted contents to restore the contents into original contents (so-called plaintext contents) and reproducing the original contents require a personal computer or the like which is equipped with a reproduction-only board (hereinafter called "reproduction board") on which an application-specific integrated circuit device (hereinafter referred to as "application-specific IC") designed for contents decryption is mounted. This application-specific IC inhibits a third party from making an unauthorized access to encrypted contents.

Such an application-specific IC incorporates a decryption key for decrypting encrypted contents and a decryption algorithm as data. As this application-specific IC is physically packaged in such a way that it cannot be seen from outside, an unauthorized person (attacker) cannot acquire the decryption key and decryption algorithm. It is believed that this scheme provides protection of contents.

As personal computers become very popular, software-based decryption schemes have been developed so that encrypted contents can be decrypted without using the aforementioned reproduction board but simply by running an information reproducing program. In this case, a reproduction program which has the same functions as the decryption key and decryption algorithm incorporated in the aforementioned application-specific IC is installed in a personal computer and is run to decrypt and reproduce encrypted contents recorded on an information recording medium.

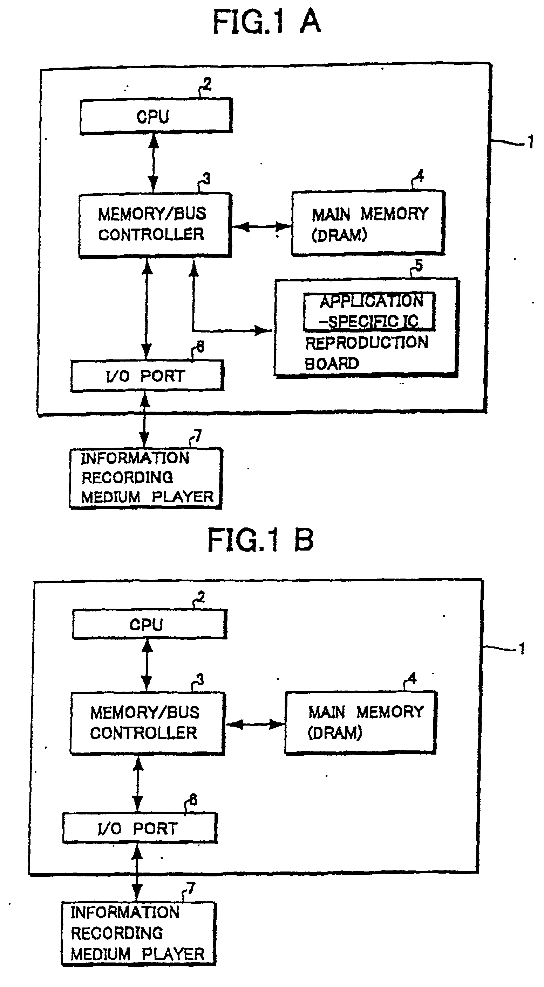

As shown in FIG. 1A, the personal computer equipped with the aforementioned reproduction board has at least a microprocessor (CPU) 2, a memory/bus controller 3 for system control, a main memory (DRAM) 4, a reproduction board 5 on which an application-specific IC is mounted, an input/output (I/O) port 6 which connects to an information recording medium player 7, such as a CD player or DVD player, all mounted on an electric circuit board 1 as a mother board. The main memory 4 is connected to the memory/bus controller 3 via a bus which is patterned on the electric circuit board 1. The reproduction board 5 and the I/O port 6 are connected to the memory/bus controller 3 via a PCI bus and the like.

When reproduction of encrypted contents stored in the information recording medium player 7 is initiated, the microprocessor 2 reads out a decryption key and decryption algorithm from the application-specific IC and stores them in the main memory 4. Then, the microprocessor 2 decrypts encrypted contents supplied from the information recording medium player 7 based on the decryption key and decryption algorithm stored in the main memory 4, and expands the decrypted contents to reproduce original contents.

Although an illegitimate user cannot directly acquire the decryption key and decryption algorithm stored in the application-specific IC, those decryption key and decryption algorithm are not secured completely. For example, those decryption key and decryption algorithm are transferred to the main memory 4 before reproducing the encrypted contents, they can be read as data by a simple reading program.

The main memory 4 is provided open to external units, and an ordinary memory access is made to this main memory 4 at the time the microprocessor 2 runs any program. Therefore, an illegitimate user can easily obtain the decryption key and decryption algorithm by merely executing an existing reading program or an unauthentic reading program to gain access to the main memory 4. By analyzing the decryption key and decryption algorithm, the illegitimate user can illegitimately process the encrypted contents.

In the case where encrypted contents are reproduced by a personal computer which does not have the aforementioned reproduction board or without using the reproduction board, an information reproducing program is transferred to the main memory 4 from the information recording medium player 7 before information reproduction starts. Then, the microprocessor 2 executes a decryption key and decryption algorithm in the information reproducing program stored in the main memory 4 and an expanding program to decrypt and expand the encrypted contents supplied from the information recording medium player 7. As a result, the original contents are reproduced.

Even when software-based reproduction of encrypted contents is carried out by an information reproducing program, therefore, an unauthorized user can easily read the decryption key and decryption algorithm stored in the main memory 4 and can illegitimately process the encrypted contents by analyzing the obtained decryption key and decryption algorithm.

### SUMMARY OF THE INVENTION

Accordingly. it is an object of the present invention to provide a signal processing technique capable of inhibiting unauthorized processing of encrypted contents.

Aspects of the present invention are defined in the appended claims.

With the above structures, the memory means, the program execution means (or step) and the discrimination means (or step) are concealed from outside. Unless the special program is stored in the memory means and is executed, encrypted contents cannot be decrypted to original contents and reproduced. The structures can therefore prevent eavesdropping of the special program and can thus protect the contents.

It is preferable that the discrimination means has attribute memory means for storing attribute information of the special program to be stored in the memory means, and compares the attribute information stored in the attribute memory means with the information indicating the attribute of the special program supplied from the program execution means, and refuses an access to the memory means when there is no coincidence.

In the case of the signal processing method, the discrimination step may store attribute information of the special program to be stored in the memory means, and compare the attribute information with the information indicating the attribute of the special program generated in the program execution step, and refuse an access to the memory means when there is no coincidence.

According to the above modes, an access to the memory means is granted only when attribute information stored in the attribute memory (step) coincides with the information that indicates the attribute of the special program supplied from the program execution means (generated in the program execution step). This prevents an illegitimate user from acquiring the special program.

An information recording medium to be used in the aforementioned signal processing apparatus or signal processing method in which the special program and a transfer program for transferring the special program to the memory means to be stored therein are recorded; and the special program is recorded in a fragmented manner, and the transfer program, when executed by the program execution means, restores the fragmented special program and stores the restored special program into the memory means.

According to this information recording medium, a special program is recorded in a fragmented form. Even if an illegitimate user acquires the fragmented special program, therefore, the fragmentation makes it hard to analyze the special program, thereby protecting the encrypted contents. Further, the fragmented special program is restored and stored in a memory area when the signal processing apparatus (method) executes the transfer program. The encrypted contents can be decrypted into original contents when the signal processing apparatus (method) executes the restored special program stored in the memory area.

### BRIEF DESCRIPTION OF THE DRAWINGS

FIGS. 1A and 1B are diagrams for explaining shortcomings of conventional personal computers;
FIG. 2 is a block diagram illustrating the structure of a data processor according to one embodiment of this invention;
FIG. 3 is a block diagram showing the structure of a memory with an access discriminating/limiting circuit incorporated in the data processor:
FIG. 4 is a flowchart illustrating an operation of storing special programs for reproduction in the memory with the access discriminating/limiting circuit;
FIG. 5 is a flowchart illustrating an operation which inhibits unauthorized reading of special programs from the memory with the access discriminating/limiting circuit;
FIG. 6 is a flowchart illustrating an operation which inhibits unauthorized reading of special data from the memory with the access discriminating/limiting circuit;
FIG. 7 is a flowchart illustrating an operation which inhibits data from being illegitimately written in the memory with the access discriminating/limiting circuit;
FIG. 8 is a block diagram depicting the structure of a microprocessor in the case where this invention is adapted to an ordinary microprocessor; and
FIG. 9 is a block diagram depicting the structure of an internal cache unit in the case where this invention is adapted to an ordinary microprocessor.

### DETAILED DESCRIPTION OF THE PREFERRED EMBODIMENTS

Preferred embodiments of the present invention will now be described with reference to the accompanying drawings.

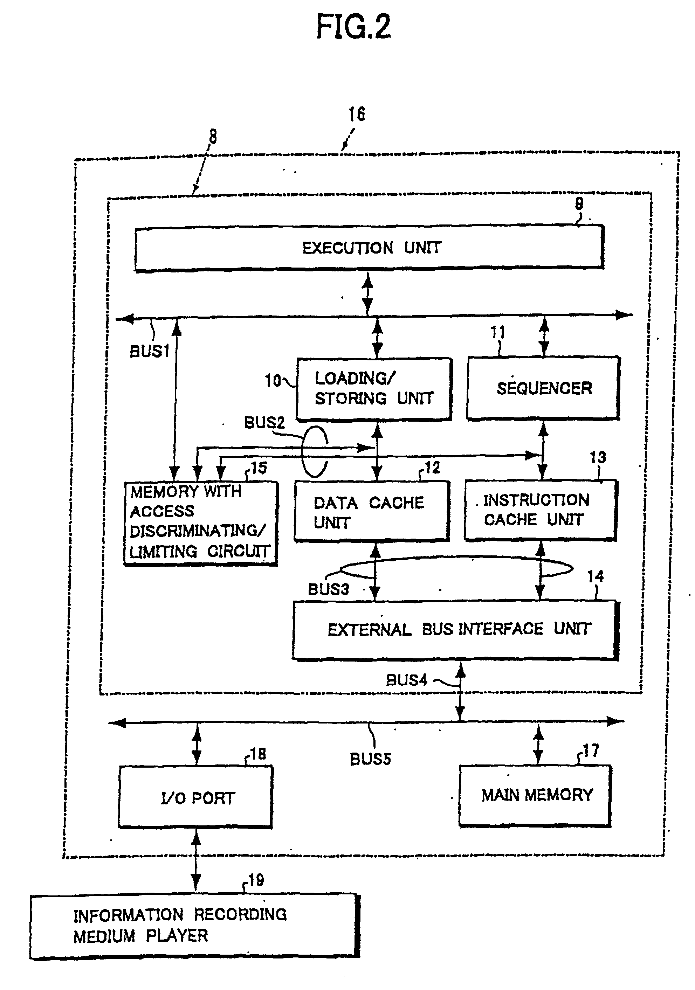

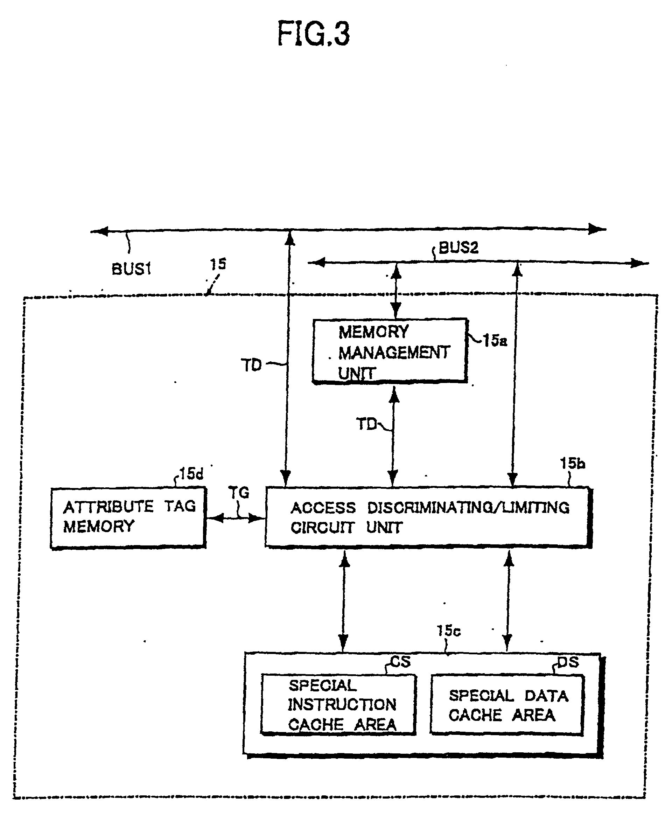

FIG. 2 is a block diagram illustrating the structure of a signal processing apparatus according to one embodiment of this invention, and FIG. 3 is a block diagram showing the structure of a memory with an access discriminating/limiting circuit which is incorporated in the signal processing apparatus.

Referring to FIG. 2, the signal processing apparatus (hereinafter referred to as "data processor") 8 is an integrated circuit device which can decrypt and reproduce encrypted contents, such as encrypted video data, audio data, text data or program. The data processor 8 has a so-called circuit on a chip architecture which is integrally formed on the same semiconductor chip (die) by the semiconductor manufacturing technology. As the die is sealed by a resin mold or the like, the data processor 8 cannot be seen from outside.

The data processor 8 comprises, as essential circuits, an execution unit 9, a loading/storing unit 10, a sequencer 11, a data cache unit 12, an instruction cache unit 13, an external bus interface unit 14 and a memory 15 with an access discriminating/limiting circuit. Further formed in the data processor 8 are an internal, bus BUS1 and an internal memory bus BUS2, which are used for data transfer among those essential circuits, and other data transfer buses BUS3 and BUS4.

Connected to the internal bus BUS1 are the execution unit 9, the loading/storing unit 10, the sequencer 11 and the memory 15. Connected to the internal memory bus BUS2 are the loading/storing unit 10, the sequencer 11, the data cache unit 12, the instruction cache unit 13 and the memory 15. The data cache unit 12 and the instruction cache unit 13 are connected to the external bus interface unit 14 via the data transfer bus BUS3. The data transfer bus BUS4 connected to the external bus interface unit 14 is connected to an external bus BUS5 which is formed on an electric circuit board 16 to be discussed later.

The execution unit 9, like a so-called microprocessor (CPU), has functional unit circuits, such as an instruction control section and an arithmetic operation control section, which execute a computer program. As the functions of the execution unit 9 are similar to those of a so-called microprocessor (CPU), which is disclosed in various documents, their detailed descriptions will not be given below. The instruction control section performs the general control of the data processor 8 by fetching and decoding an instruction and producing an operand address of that instruction. The arithmetic operation control section controls arithmetic operations, such as addition, subtraction, multiplication and division, logical operations and the like in accordance with the instruction decoded by the instruction control section.

The loading/storing unit 10, the sequencer 11, the data cache unit 12, the instruction cache unit 13, the external bus interface unit 14 and the memory 15 with the access discriminating/limiting circuit constitute an RISC (Reduced Instruction Set Computer) type memory control section, which controls transfer of an instruction to be executed by the execution unit 9 or transfer of data. Further, this memory control section controls the conversion of an operand address or the like, a logical address (virtual address), generated by the instruction control section in the execution unit 9, into a real address (physical address). The memory control section also checks if an instruction or data is stored in the data cache unit 12, the instruction cache unit 13 and the memory 15- When an instruction or data is stored there, the memory control section reads the instruction or data and sends the instruction or data to the execution unit 9.

When an instruction or data is not stored in the data cache unit 12, the instruction cache unit 13 and the memory 15, the memory control section accesses the main memory 17 via the external bus interface unit 14, reads an instruction or data from the main memory 17 and transfers the instruction or data to the memory 15. Thereafter, the memory control section sends the instruction or data to the execution unit 9.

The above memory control will now be discussed more specifically. The instruction cache unit 13 has a cache memory area for storing a part of a program which is frequently executed and has been read from the main memory 17. This cache memory area will be hereinafter called "normal instruction cache area". The data cache unit 12 has a cache memory area for storing data which is likely to be used and has been read from the main memory 17. This cache memory area will be hereinafter called "normal data cache area". Those normal instruction cache area and normal data cache area are formed by memory devices which are faster than the main memory 17.

It is to be noted that the instruction cache unit 13 and the data cache unit 12 do not store special programs and data for decrypting encrypted contents. Such special programs and data are stored in an internal cache memory 15c provided in the memory 15.

The memory 15 has a cache memory area CS for storing a program for decrypting encrypted contents, which has been fetched from the main memory 17, and a cache memory area DS for storing data at the time decryption is carried out. The cache memory area CS will be hereinafter called "special instruction cache memory area CS", and the cache memory area DS will be hereinafter called "special data cache memory area DS". Those special instruction cache memory area CS and special data cache memory area DS are formed by memory devices which are faster than the main memory 17.

At the time the execution unit 9 executes a data transfer instruction, the loading/storing unit 10 accesses the normal data cache area or the special data cache memory area DS to execute data transfer.

The sequencer 11 accesses the aforementioned normal instruction cache area or the special instruction cache memory area CS, which corresponds to the real address, and controls the execution of an instruction.

The external bus interface unit 14 controls the transfer of a program and data among the data processor 8, the main memory 17 and an information recording medium player 19 connected to an input/output (I/O) port 18.

As shown in FIG. 3, the memory 15 with the access discriminating/limiting circuit comprises a memory management unit 15a, an access discriminating/limiting circuit unit 15b, the aforementioned internal cache memory 15c and an attribute tag memory 15d.

The memory management unit 15a converts a logical address supplied via the loading/storing unit 10 to a real address and sends the real address to the access discriminating/limiting circuit unit 15b. The internal cache memory 15c has the aforementioned special instruction cache memory area CS and special data cache memory area DS. Tag data for identifying addresses is stored in the attribute tag memory 15d.

Upon reception of an access control instruction from the loading/storing unit 10 via the internal memory bus BUS2, the access discriminating/limiting circuit unit 15b decodes predetermined bits of the real address from the memory management unit 15a and accesses the attribute tag memory 15d based on the decoded data to read tag data TG from the attribute tag memory 15d.

Further, the access discriminating/limiting circuit unit 15b compares the read tag data TG with special attribute data TD (indicating the attribute of a special program) supplied via the internal bus BUS1 from the execution unit 9. When those data TG and TD match with each other, the access discriminating/limiting circuit unit 15b transfers a program code in the special instruction cache memory area CS or data in the special data cache memory area DS, which corresponds to the decoded data, to the execution unit 9 via the sequencer 11 or the loading/storing unit 10. When the data TG and TD do not coincide with each other, the access discriminating/limiting circuit unit 15b does not transfer the program code in the special instruction cache memory area CS or data in the special data cache memory area DS to the execution unit 9. That is, the access discriminating/limiting circuit unit 15b permits the transfer of a program code or data between the execution unit 9 and the internal cache memory 15c only when the tag data TG and the special attribute data TD coincide with each other. When the tag data TG and the special attribute data TD do not coincide with each other, the access discriminating/limiting circuit unit 15b inhibits the transfer of the program code and data, thus refusing a request to access the internal cache memory 15c.

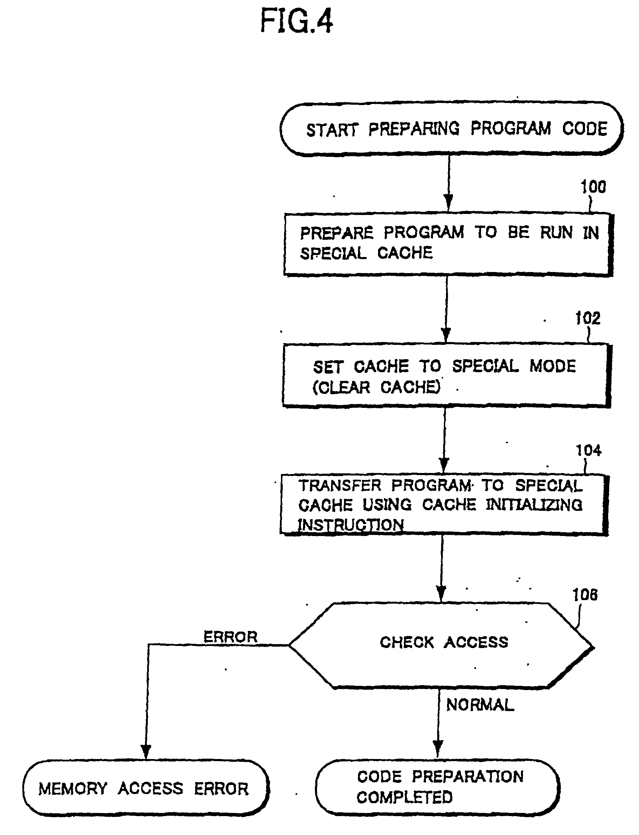

The operation of the data processor 8 having the above-described structure will now be discussed with reference to flowcharts illustrated in FIGS. 4 through 7. It is assumed that an operating system (OS) which executes special programs or so-called application programs, such as a decryption key and a decryption algorithm, is prestored in the main memory 17 and contents (encrypted contents) which are to be reproduced by the information recording medium player 19, such as a CD player or DVD player, are decrypted and reproduced under the control of this operating system.

In addition to compressed and encrypted contents, special programs for reproduction are stored in an information recording medium, such as a CD or DVD, which is played by the information recording medium player 19. The special programs include a decryption key and a decryption algorithm for decrypting encrypted contents, an expansion program for expanding decrypted contents as needed, and a loader program for loading the compressed and encrypted contents, the decryption key and decryption algorithm, and the expansion program into the data processor 8.

Of the special programs, at least the decryption key and decryption algorithm are recorded in a fragmented form and at random together with a dummy program which does not contributed to a reproduction process, so that the decryption key and decryption algorithm are difficult to analyze.

In FIG. 4, when a user instructs the preparation of a reproduction process to reproduce compressed and encrypted contents, the execution unit 9 activates the information recording medium player 19 transfers the special programs recorded on the information recording medium into the main memory 17 (step 100). Note that the decryption key and decryption algorithm are stored in the fragmented form in the main memory 17. Even when those fragmented decryption key and decryption algorithm are read from the main memory 17, therefore, it is extremely difficult to restore the original decryption key and decryption algorithm.

Then, the execution unit 9 executes the loader program, one of the special programs stored in the main memory 17, to store the decryption key and decryption algorithm and the expansion program in the internal cache memory 15c in the access discriminating/limiting circuit unit 15b (steps 102, 104 and 106).

When it is the first access control to the access discriminating/limiting circuit unit 15b by the execution unit 9, the access discriminating/limiting circuit unit 15b sets the internal cache memory 15c to a special mode and clears the special instruction cache memory area CS and the special data cache memory area DS (step 102).

After the memory clearing process is completed, the execution unit 9 transfers the decryption key and decryption algorithm and the expansion program to the special instruction cache memory area CS and special data cache memory area DS (step 104) and performs an access check before storage (step 106). The loader program has a cache initialization instruction codes for decrypting the fragmented decryption key and decryption algorithm into a continuous decryption key and decryption algorithm. This loader program the restored decryption key and decryption algorithm and the expansion program in the special instruction cache memory area CS and the special data cache memory area DS and stores the tag data TG into the attribute tag memory 15d in association with individual index addresses of the special instruction cache memory area CS and the special data cache memory area DS (steps 104 and 106). When the decryption key and decryption algorithm and the expansion program are properly stored, the preparation for the reproduction of the encrypted contents is completed. When an access error occurs in step 106, the decryption key and decryption algorithm and the expansion program are not stored and the execution unit 9 executes an interrupt routine to check an error.

When the user gives an instruction to start reproduction after the decryption key and decryption algorithm and the expansion program are restored and stored in the internal cache memory 15c, the execution unit 9 executes the decryption key and decryption algorithm and the expansion program stored in special instruction cache memory area CS and the special data cache memory area DS to decrypt and expand the encrypted contents supplied from the information recording medium player 19, yielding original (so-called plaintext) contents. The execution unit 9 than transfers the original contents to the main memory 17. As the contents stored in the main memory 17 are transferred to a display and/or an audio system (neither shown) via the external bus BUS4, image reproduction and audio reproduction and/or audio reproduction is carried out.

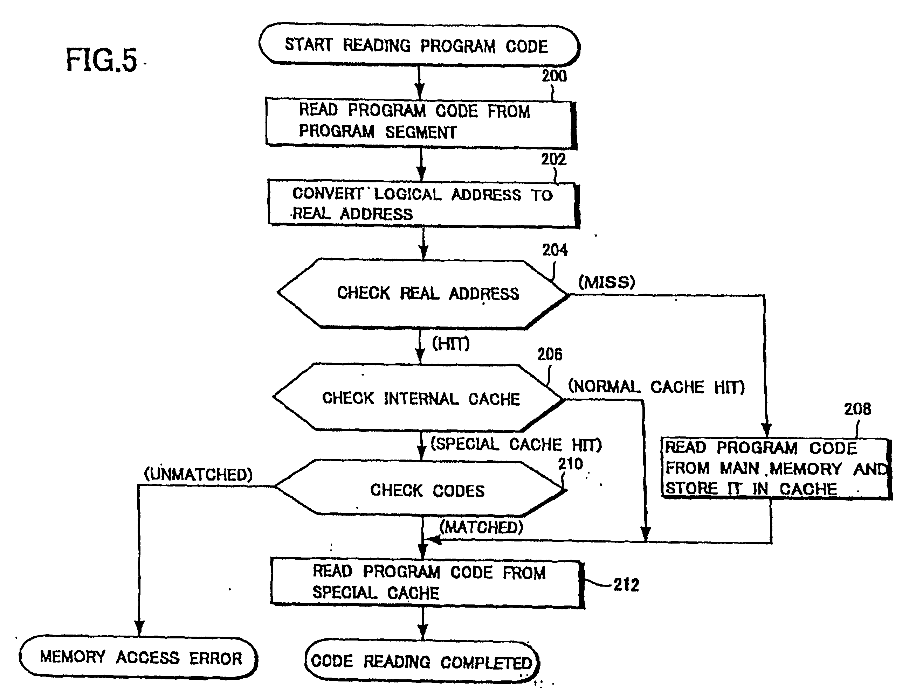

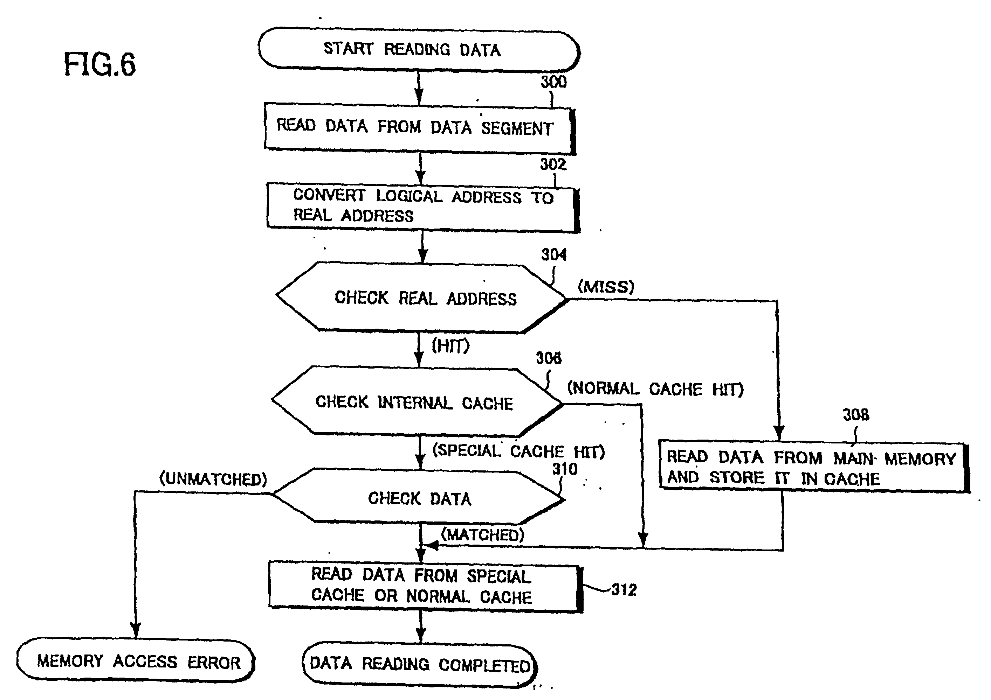

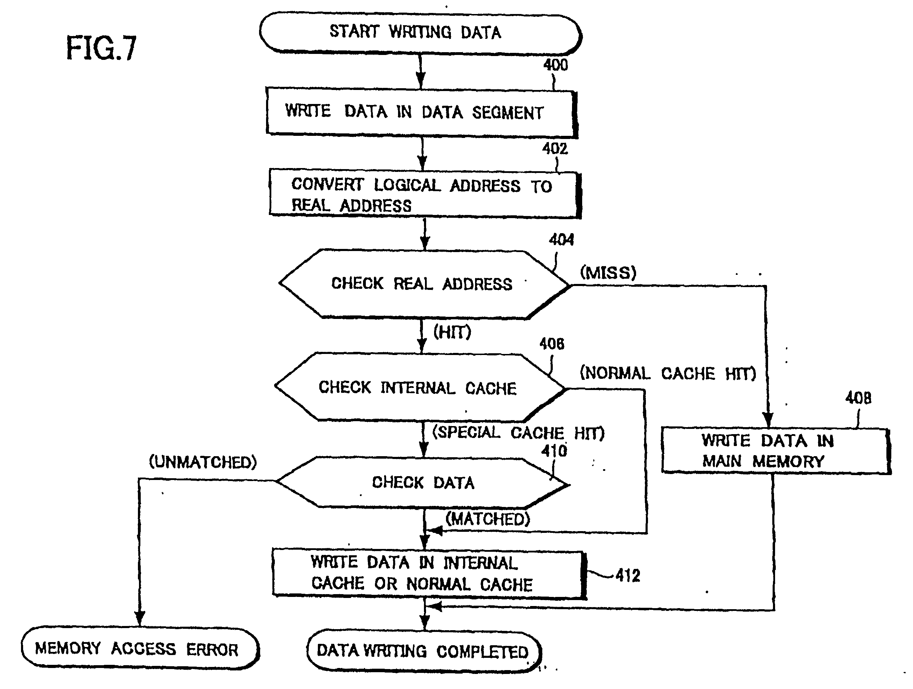

At the time the execution unit 9 executes the decryption key and decryption algorithm and the expansion program stored in the special instruction cache memory area CS and the special data cache memory area DS, reading of program codes is carried out according to the flowchart shown in FIG. 5, data reading is carried out according to the flowchart shown in FIG. 6 and data writing is carried out according to the flowchart shown in FIG. 7.

### Program Code Reading

In FIG. 5, when the execution unit 9 accesses the access discriminating/limiting circuit unit 15b to read a program code (operation code) (step 200), the memory management unit 15a converts a logical address to a real address (step 202). The access discriminating/limiting circuit unit 15b checks the real address to determine if it the access is directed to the internal cache memory 15c (steps 204 and 206).

When the access is not directed to the internal cache memory 15c or the normal instruction cache area in step 204, the execution unit 9 proceeds to step 208 to read a program code from the main memory 17 and stores it in the internal cache memory 15c or the normal instruction cache area. When the program code is stored in the internal cache memory 15c, the execution unit 9 reads the stored program code in step 212 which completes the reading of the program code.

When it is determined in step 206 that the access is directed to the normal instruction cache area, on the other hand, the execution unit 9 goes to step 212 to read a program code from the normal instruction cache area, thus completing the reading of the program code.

When it is determined in step 206 that the access is directed to the internal cache memory 15c, the execution unit 9 moves to step 210 where the access discriminating/limiting circuit unit 15b compares special attribute data TD, which has been supplied from the execution unit 9 at the same time as the access request has been made, with the tag data TG in the attribute tag memory 15d. When those data TD and TG coincide with each other, the flow proceeds to step 212 where a program code is read from the special instruction cache memory area CS in the internal cache memory 15c and transferred to the execution unit 9. This completes the reading of the program code. As the execution unit 9 executes the transferred program code, the encrypted contents are decrypted based on the decryption key and decryption algorithm.

When the data TD and TG do not coincide with each other in step 210, the execution unit 9 executes an interrupt routine to check an error.

In short, at the time of making an access to read a program code, the access discriminating/limiting circuit unit 15b checks whether or not the special attribute data TD matches with the tag data TG in the attribute tag memory 15d, denies an access to the internal cache memory 150 when there is no match, and grants an access to the internal cache memory 15c only when there is a match. This can inhibit illegitimate memory access.

### Data Reading

In FIG. 6, when the execution unit 9 accesses the access discriminating/limiting circuit unit 15b to read data (step 300), the memory management unit 15a converts a logical address to a real address (step 302). The access discriminating/limiting circuit unit 15b checks the real address to determine if it the access is directed to the internal cache memory 15c (steps 304 and 306).

When the access is not directed to the internal cache memory 15c or the normal data cache area in step 304, the execution unit 9 proceeds to step 308 to read data from the main memory 17 and stores it in the internal cache memory 15c or the normal data cache area. When the data is stored in the internal cache memory 15c, the execution unit 9 reads the stored data in step 312 which completes the reading of the data.

When it is determined in step 306 that the access is directed to the normal data cache area, on the other hand, the execution unit 9 goes to step 312 to read data from the normal data cache area, thus completing the reading of the data.

When it is determined in step 306 that the access is directed to the internal cache memory 15c, the execution unit 9 moves to step 310 where the access . discriminating/limiting circuit unit 15b compares special attribute data TD, which has been supplied from the execution unit 9 at the same time as the access request has been made, with the tag data TG in the attribute tag memory 15d. When those data TD and TG coincide with each other, the flow proceeds to step 312 where data is read from the special data cache memory area DS in the internal cache memory 15c and transferred to the execution unit 9. This completes the reading of the data. As the execution unit 9 processes the transferred data, the encrypted contents are decrypted based on the decryption key and decryption algorithm.

When the data TD and TG do not coincide with each other in step 310, the execution unit 9 executes an interrupt routine to check an error.

As apparent from the above, at the time of making an access to read data, the access discriminating/limiting circuit unit 15b checks whether or not the special attribute data TD matches with the tag data TG in the attribute tag memory 15d, denies an access to the internal cache memory 15c when there is no match, and grants an access to the internal cache memory 15c only when there is a match. This can inhibit illegitimate memory access.

### Data Writing

In FIG. 7, when the execution unit 9 accesses the access discriminating/limiting circuit unit 15b to write data (step 400), the memory management unit 15a converts a logical address to a real address (step 402). The access discriminating/limiting circuit unit 15b checks the real address to determine if it the access is directed to the internal cache memory 15c (steps 404 and 406).

When the access is not directed to the internal cache memory 15c or the normal data cache area in step 404, the execution unit 9 proceeds to step 408 to store data in the main memory 17. This completes data writing.

When it is determined in step 406 that the access is directed to the normal data cache area, on the other hand, the execution unit 9 goes to step 412 to write data in the normal data cache area, thus completing data writing.

When it is determined in step 406 that the access is directed to the internal cache memory 15c, the execution unit 9 moves to step 410 where the access discriminating/limiting circuit unit 15b compares special attribute data TD, which has been supplied from the execution unit 9 at the same time as the access request has been made, with the tag data TG in the attribute tag memory 15d. When those data TD and TG match with each other, the flow proceeds to step 412 where data is written in the special data cache area DS in the internal cache memory 15c. This completes data writing.

When the data TD and TG do not match with each other in step 410, the execution unit 9 executes an interrupt routine to check an error.

In short, at the time of making an access to write data, the access discriminating/limiting circuit unit 15b checks whether or not the special attribute data TD matches with the tag data TG in the attribute tag memory 15d, thereby determining if data of the decryption key and decryption algorithm have been accessed legitimately. This can prevent illegitimate memory access.

As apparent from the above, the data processor 8 according to this embodiment has the following advantages.
(1) Special programs, such as a decryption key and decryption algorithm, are stored in the memory 15 with the access discriminating/limiting circuit, and encrypted contents are decrypted to original contents only when those special programs stored in the memory 15 are executed. This can prevent special programs, such as a decryption key and decryption algorithm, from being illegitimately acquired by an attacker and thus can ensure protection of contents against an active attack (eavesdropping and falsification of program codes and data).
   The special programs stored in the memory 15 with the access discriminating/limiting circuit are executed only inside the data processor 8 that is concealed from outside, encrypted contents are decrypted and reproduced. While an legitimate user and an attacker can acquire encrypted contents which are supplied to the data processor 8 and their decrypted and reproduced contents, the authorized user and attacker cannot grasp the decrypting process that has taken place during the decryption and reproduction. This can prohibit special programs, such as a decryption key and decryption algorithm, from being eavesdropped.
(2) As shown in FIGS. 5 and 6, the special attribute data TD is compared with the tag data TG in the attribute tag memory 15d, and an access to the special instruction cache memory area CS and the special data cache memory area DS is denied when both data do not coincide with each other. This can prevent the decryption key and decryption algorithm from being acquired by an illegitimate user (attacker).
(3) As shown in FIG. 4, at the time the load program stores the decryption key and decryption algorithm in the special instruction cache memory area CS and the special data cache memory area DS, old programs and data in the instruction cache memory area CS and the special data cache memory area DS are cleared before new ones are stored. Every time a reproduction process is carried out, therefore, the load program stores the decryption key and decryption algorithm in the special instruction cache memory area CS and the special data cache memory area DS. This can prohibit illegitimate acquisition and falsification of the decryption key and decryption algorithm by an attacker.

Although the foregoing description of this embodiment has been given of the data processor 8 which is designed exclusively for signal processing, this invention can prevent eavesdropping (including illegitimate acquisition) of the decryption key and decryption algorithm even in the case where a general microprocessor (CPU) available on the market runs a reproduction program to carry out software-based decryption and reproduction of encrypted contents.

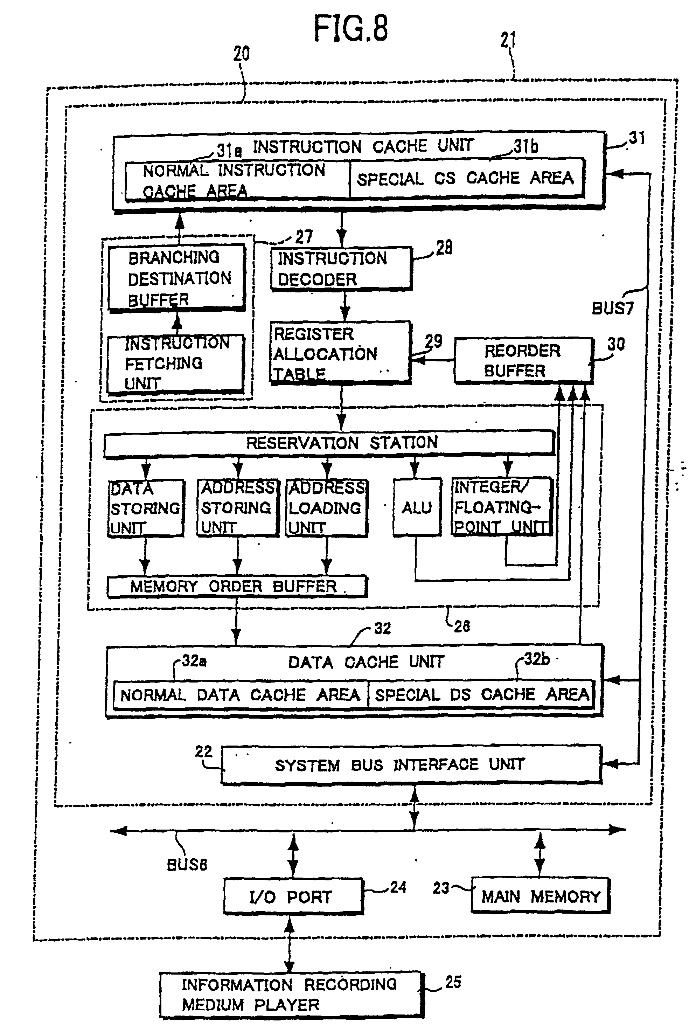

FIG. 8 shows the general circuit structure of another embodiment that uses a Pentinum microprocessor 20 (manufactured by Intel Co.). The microprocessor 20 is mounted on an electric circuit board 21 called a mother board. A system bus interface unit 22 formed in the microprocessor 20 is connected to an external bus BUS6 formed on the electric circuit board 21. A main memory 23 is connected to the external bus BUS6, and an information recording medium layer 25 is connected to the external bus BUS6 via an I/O port 24.

The microprocessor 20 comprises, as essential circuits, an execution unit 26, an instruction fetching unit 27, an instruction decoder 28, a register allocation table 29, a reorder buffer 30, an instruction cache unit 31 and a data cache unit 32 in addition to the aforementioned system bus interface unit 22. The system bus interface unit 22, the instruction cache unit 31 and the data cache unit 32 exchange a program and data via an internal bus BUS7.

As the functions of the essential circuits are disclosed in various documents, their detailed descriptions will not be given below. The key points of this embodiment lie in that an instruction cache memory formed in the instruction cache unit 31 has a normal instruction cache area 31a of level 1 (L1) and a special CS cache area 31b for storing special program codes associated with a decryption key and decryption algorithm, and a data cache memory formed in the data cache unit 32 has a normal data cache area 32a of level 1 (L1) and a special DS cache area 32b for storing special data associated with the decryption key and decryption algorithm.

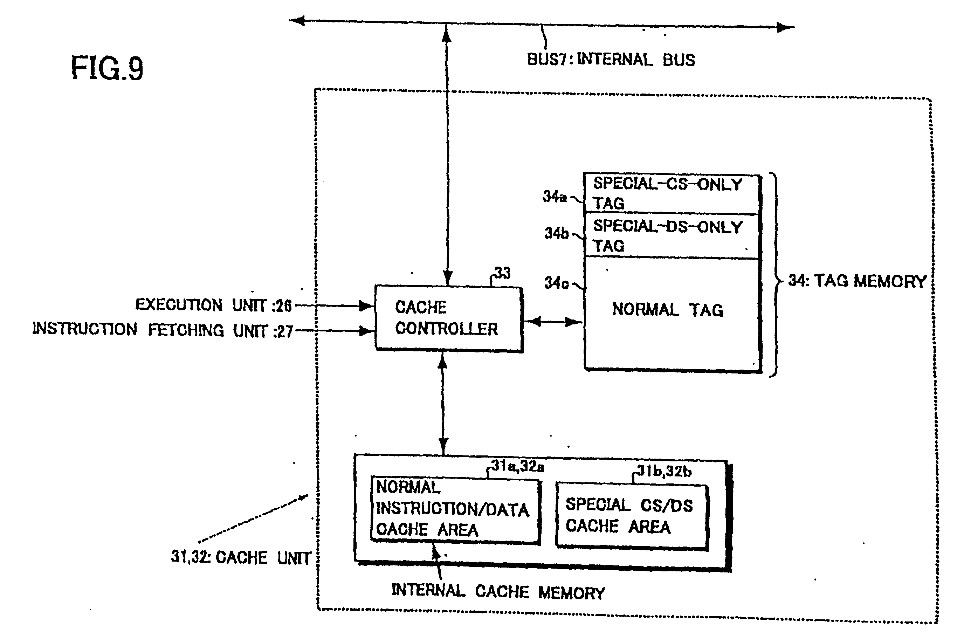

More specifically, as shown in FIG. 9, the instruction cache unit 31 and the data cache unit 32 have the internal cache memories that include the special CS cache area 31b and the special DS cache area 32b for storing special program codes and data, in addition to the normal instruction cache area 31a and normal data cache area 32a. Each of the cache units 31 and 32 further has a cache controller 33, which is connected to the execution unit 26 and the instruction fetching unit 27 and the internal bus BUS7, and a tag memory 34.

The tag memory 34 has a tag memory area 34a for storing tag data TGC corresponding to an index address of the special CS cache area 31b (hereinafter called "special-CS-only tag"), a tag memory area 34b for storing tag data TGD corresponding to an index address of the special DS cache area 32b (hereinafter called "special-DS-only tag"), and a tag memory area 34c for storing tag data corresponding to index addresses of the normal instruction cache area 31a and normal data cache area 32a (hereinafter called "normal tag").

With the above structure, when a user instructs preparation of a reproduction process to reproduce encrypted contents, the same process as illustrated in the flowchart in FIG. 4 is carried out. Accordingly, special programs, such as a decryption key and decryption algorithm, a loader program and an expansion program, stored on an information recording medium are transferred from the information recording medium player 25 to the main memory 23, and the loader program stored in the main memory 23 is then executed.

As the decryption key and decryption algorithm are stored fragmented in the main memory 23, it is extremely difficult to restore the fragmented decryption key and decryption algorithm, if read from the main memory 23, to the original.

When the loader program is executed, the special CS cache area 31b and the special DS cache area 32b are cleared first. Then, the decryption key and decryption algorithm and the expansion program stored in the main memory 23 are restored and transferred to the special CS cache area 31b and the special DS cache area 32b. Further, the special tag data TGC is stored in the tag memory area 34a of the tag memory 34 in association with the index address of the special CS cache area 31b, and the special tag data TGD is stored in the tag memory area 34b in association with the index address of the special DS cache area 32b.

Next, the microprocessor 20 executes the decryption key and decryption algorithm and the expansion program stored in the special CS cache area 31b and the special DS cache area 32b and initiates reproduction of encrypted contents transferred from the information recording medium player 25. Subsequently, as mentioned earlier, reacting of program codes is carried out according to the flowchart shown in FIG. 5, data reading is carried out according to the flowchart shown in FIG. 6 and data writing is carried out according to the flowchart shown in FIG. 7.

At the time of reacting program codes, the cache controller 33 compares the special attribute data TD, which has been supplied from the instruction fetching unit 27 at the same time as the access request has been made, with the tag data TGC in the tag memory area 34a. The program codes in the special CS cache area 31b are read out and transferred to the instruction decoder 28 only when both data TD and TGC coincide with each other.

At the time of reading data, the cache controller 33 compares the special attribute data TD, which has been supplied from the memory order buffer in the execution unit 26 at the same time as the access request has been made, with the tag data TGD in the tag memory area 34b. The data in the special DS cache area 32b is read out and transferred to the reorder buffer 30 only when both data TD and TGD coincide with each other.

At the time of writing data, the cache controller 33 compares the special attribute data TD, which has been supplied from the memory order buffer in the execution unit 26 at the same time as the access request has been made, with the tag data TGD in the tag memory area 34b. The data in the special DS cache area 32b is written into the special DS cache area 32b only when both data TD and TGD coincide with each other.

Even in the case the general microprocessor 20 available on the market runs a reproduction program to carry out software-based decryption and reproduction of encrypted contents, special programs, such as a decryption key and decryption algorithm, that should be protected against eavesdropping are executed only in the microprocessor 20 and the processes of decrypting and expanding encrypted contents to original contents which are executed in the microprocessor 20 are concealed from outside. This structure can therefore prohibit eavesdropping of special programs, such as a decryption key and decryption algorithm, and thus can protect contents against an attack.

As described above, the signal processing apparatus of this invention has the memory means, the program execution means (or step) and the discrimination means (or step) concealed from outside and allows encrypted contents to be decrypted to the original contents and reproduced only by storing special programs in the memory means and then executing the programs. This can prevent eavesdropping of the special programs, thus leading to protection of the contents against an attack.

Further, an access to the memory means is granted only when attribute information stored in the attribute memory coincides with the information that indicates the attribute of a special program supplied from the program execution means. This prevents an illegitimate user from acquiring the special program.

Furthermore, special programs are recorded in a fragmented form on an information recording medium, so that even if an attacker acquires the fragmented special program, the fragmentation makes it hard to analyze the special program, thereby protecting the encrypted contents. The fragmented special program is restored and stored in a memory area when the signal processing apparatus executes the transfer program. The encrypted contents can be decrypted into original contents when the signal processing apparatus executes the restored special program stored in the memory area.

## Claims

1. A signal processing apparatus (8) for decrypting encrypted contents, supplied externally, to restore said encrypted contents to original contents and sending out said original contents, comprising:
memory means (15c) for storing a special program for decrypting and restoring said encrypted contents to said original contents;
attribute memory means (15d) for storing attribute information of said special program stored in said memory means;
program execution means (9) for executing said special program stored in said memory means to decrypt and restore said encrypted contents to said original contents;
discrimination means (15b) for determining if said program execution means has accessed said memory means with information indicating an attribute of said special program supplied from said program execution means, and refusing an access to said memory means when said program execution means has accessed said memory means without said information indicating an attribute of said special program supplied from said program execution means; and
inputting/outputting means (14) for receiving said special program supplied externally and said encrypted contents and outputting said restored contents,
wherein said discrimination means compares said attribute information stored in said attribute memory means with said information indicating said attribute of said special program supplied from said program execution means, and refuses an access to said memory means when there is no coincidence, and
wherein said memory means, said program execution means and said discrimination means are concealed from external units.

2. The signal processing apparatus according to claim 1, wherein when said memory means stores said special program, said program execution means clears said memory means and then stores said special program into said memory means.

3. Use of said signal processing apparatus as recited in any one of claims 1 to 2, for reproducing information on an information recording medium in which said special program and a transfer program for transferring said special program to said memory means (15c) to be stored therein are recorded,
wherein said special program is recorded in a fragmented manner, and said transfer program, when executed by said program execution means (9), restores said fragmented special program and stores said restored special program into said memory means (15c).

4. A signal processing method of decrypting encrypted contents, supplied externally, to restore said encrypted contents to original contents and sending out said original contents, comprising:
a first storage step of storing a special program for decrypting and restoring said encrypted contents to said original contents in memory means (15c);
a second storage step of storing attribute information of said special program stored in said memory means in attribute memory means (15d);
a program execution step of executing said special program stored in said memory means (15c) to decrypt and restore said encrypted contents to said original contents;
a discrimination step of determining if said memory means has been accessed with information indicating an attribute of said special program generated in said program execution step, and refusing an access to said memory means when said memory means have been accessed without said information; and
an inputting/outputting step of receiving said special program supplied externally and said encrypted contents and outputting said restored contents,
wherein said discrimination step compares said attribute information stored in said attribute memory means with said information indicating said attribute of said special program generated in said program execution step, and refuses an access to said memory means when there is no coincidence.

5. The signal processing method according to claim 4, wherein when said memory means (15c) stores said special program, said program execution step clears said memory means and then stores said special program into said memory means.

6. Use of said signal processing method as recited in any one of claims 4 or 5, for reproducing information on an information recording medium in which said special program and a transfer program for transferring said special program to said memory means (15c) to be stored therein are recorded,
wherein said special program is recorded in a fragmented manner, and said transfer program, when executed by said program execution step, restores said fragmented special program and stores said restored special program into said memory means (15c).

## Patentansprüche

1. Signalverarbeitungsvorrichtung (8) zum Entschlüsseln von extern gelieferten verschlüsselten Inhalten, um die ursprünglichen Inhalte der verschlüsselten Inhalte wiederherzustellen, und zum Aussenden der ursprünglichen Inhalte; wobei die Signalverarbeitungsvorrichtung folgendes aufweist:
eine Speichereinrichtung (15c) zum Speichern eines speziellen Programms zum Entschlüsseln der verschlüsselten Inhalte und Wiederherstellen der ursprünglichen Inhalte;
eine Attributspeichereinrichtung (15d) zum Speichern von Attributinformation des in der Speichereinrichtung gespeicherten speziellen Programms;
eine Programmausführungseinrichtung (9) zum Ausführen des in der Speichereinrichtung gespeicherten speziellen Programms, um die verschlüsselten Inhalte zu entschlüsseln und die ursprünglichen Inhalte wiederherzustellen;
eine Diskriminierungseinrichtung (15b) zum Bestimmen, ob die Programmausführungseinrichtung auf die Speichereinrichtung mit Information zugegriffen hat, die ein von der Programmausführungseinrichtung geliefertes Attribut des speziellen Programms bezeichnet, und zum Verweigern eines Zugriffs auf die Speichereinrichtung, wenn die Programmausführungseinrichtung auf die Speichereinrichtung ohne die Information zugegriffen hat, die ein von der Programmausführungseinrichtung geliefertes Attribut des speziellen Programms bezeichnet; und
eine Eingabe-/Ausgabeeinrichtung (14) zum Empfangen des extern gelieferten speziellen Programms und der verschlüsselten Inhalte und zum Ausgeben der wiederhergestellten Inhalte;
wobei die Diskriminierungseinrichtung die in der Attributspeichereinrichtung gespeicherte Attributinformation mit der Information vergleicht, die das von der Programmausführungseinrichtung gelieferte Attribut des speziellen Programms bezeichnet, und einen Zugriff auf die Speichereinrichtung verweigert, wenn keine Übereinstimmung besteht, und
wobei die Speichereinrichtung, die Programmausführungseinrichtung und die Diskriminierungseinrichtung vor externen Einheiten verborgen sind.

2. Signalverarbeitungsvorrichtung nach Anspruch 1, wobei dann, wenn die Speichereinrichtung das spezielle Programm speichert, die Programmausführungseinrichtung die Speichereinrichtung löscht und dann das spezielle Programm in der Speichereinrichtung speichert.

3. Verwendung der Signalverarbeitungsvorrichtung nach einem der Ansprüche 1 bis 2 zur Wiedergabe von Information auf einem Informationsaufzeichnungsmedium, in dem das spezielle Programm und ein Übertragungsprogramm zum Übertragen des speziellen Programms zu der Speichereinrichtung (15c) zur Speicherung darin aufgezeichnet werden,
wobei das spezielle Programm fragmentiert aufgezeichnet wird und das Übertragungsprogramm dann, wenn es von der Programmausführungseinrichtung (9) ausgeführt wird, das fragmentierte spezielle Programm wiederherstellt und das wiederhergestellte spezielle Programm in der Speichereinrichtung (15c) speichert.

4. Signalverarbeitungsverfahren zum Entschlüssen von extern gelieferten verschlüsselten Inhalten, um die ursprünglichen Inhalte der verschlüsselten Inhalte wiederherzustellen, und zum Aussenden der ursprünglichen Inhalte, wobei das Verfahren die folgenden Schritte aufweist:
einen ersten Speicherungsschritt, in dem ein spezielles Programm zum Entschlüsseln der verschlüsselten Inhalte und Wiederherstellen der ursprünglichen Inhalte in einer Speichereinrichtung (15c) gespeichert wird;
einen zweiten Speicherungsschritt, in dem Attributinformation des in der Speichereinrichtung gespeicherten speziellen Programms in einer Attributspeichereinrichtung (15d) gespeichert wird;
einen Programmausführungsschritt, in dem das in der Speichereinrichtung (15c) gespeicherte spezielle Programm ausgeführt wird, um die verschlüsselten Inhalte zu entschlüsseln und die ursprünglichen Inhalte wiederherzustellen;
einen Diskriminierungsschritt, in dem bestimmt wird, ob auf die Speichereinrichtung mit Information zugegriffen worden ist, die ein in dem Programmausführungsschritt erzeugtes Attribut des speziellen Programms bezeichnet, und in dem ein Zugriff auf die Speichereinrichtung verweigert wird, wenn auf die Speichereinrichtung ohne die Information zugegriffen worden ist; und
einen Eingabe-/Ausgabeschritt, in dem das extern gelieferte spezielle Programm und die verschlüsselten Inhalte empfangen und die wiederhergestellten Inhalte ausgegeben werden,
wobei der Diskriminierungsschritt die in der Attributspeichereinrichtung gespeicherte Attributinformation mit der Information vergleicht, die das in dem Programmausführungsschritt erzeugte Attribut des speziellen Programms bezeichnet, und einen Zugriff auf die Speichereinrichtung verweigert, wenn keine Übereinstimmung besteht.

5. Signalverarbeitungsverfahren nach Anspruch 4, wobei dann, wenn die Speichereinrichtung (15c) das spezielle Programm speichert, der Programmausführungsschritt die Speichereinrichtung löscht und dann das spezielle Programm in der Speichereinrichtung speichert.

6. Verwendung des Signalverarbeitungsverfahrens nach einem der Ansprüche 4 oder 5 zur Wiedergabe von Information auf einem Informationsaufzeichnungsmedium, in dem das spezielle Programm und ein Übertragungsprogramm zum Übertragen des speziellen Programms zu der Speichereinrichtung (15c) zur Speicherung darin aufgezeichnet werden,
wobei das spezielle Programm fragmentiert aufgezeichnet wird und das Übertragungsprogramm dann, wenn es durch den Programmausführungsschritt ausgeführt wird, das fragmentierte spezielle Programm wiederherstellt und das wiederhergestellte spezielle Programm in der Speichereinrichtung (15c) speichert.

## Revendications

1. Appareil de traitement de signal (8) pour décrypter un contenu crypté, délivré de l'extérieur, afin de restaurer ledit contenu crypté en contenu d'origine et d'envoyer ledit contenu d'origine, comportant :
des moyens de mémoire (15c) pour mémoriser un programme spécial pour décrypter ledit contenu crypté et restaurer celui-ci en ledit contenu d'origine ;
des moyens de mémoire d'attribut (15d) pour mémoriser des informations d'attribut dudit programme spécial mémorisé dans lesdits moyens de mémoire ;
des moyens d'exécution de programme (9) pour exécuter ledit programme spécial mémorisé dans lesdits moyens de mémoire afin de décrypter ledit contenu crypté et de restaurer celui-ci en ledit contenu d'origine ;
des moyens de discrimination (15b) pour déterminer si lesdits moyens d'exécution de programme ont accédé auxdits moyens de mémoire avec des informations indiquant un attribut dudit programme spécial délivré par lesdits moyens d'exécution de programme, et refuser un accès auxdits moyens de mémoire lorsque lesdits moyens d'exécution de programme ont accédé auxdits moyens de mémoire sans lesdites informations indiquant un attribut dudit programme spécial délivré par lesdits moyens d'exécution de programme ; et
des moyens d'entrée/sortie (14) pour recevoir ledit programme spécial délivré de l'extérieur et ledit contenu crypté et délivrer en sortie ledit contenu restauré,
dans lequel lesdits moyens de discrimination comparent lesdites informations d'attribut mémorisées dans lesdits moyens de mémoire d'attribut auxdites informations indiquant ledit attribut dudit programme spécial délivré par lesdits moyens d'exécution de programme, et refusent un accès auxdits moyens de mémoire lorsqu'il n'existe pas de coïncidence, et
dans lequel lesdits moyens de mémoire, lesdits moyens d'exécution de programme et lesdits moyens de discrimination sont cachés pour des unités externes.

2. Appareil de traitement de signal selon la revendication 1, dans lequel lorsque lesdits moyens de mémoire mémorisent ledit programme spécial, lesdits moyens d'exécution de programme effacent lesdits moyens de mémoire et mémorisent ensuite ledit programme spécial dans lesdits moyens de mémoire.

3. Utilisation dudit appareil de traitement de signal selon l'une quelconque des revendications 1 à 2, pour reproduire des informations sur un support d'enregistrement d'informations dans lequel sont enregistrés ledit programme spécial et un programme de transfert pour transférer ledit programme spécial vers lesdits moyens de mémoire (15c) à mémoriser dans ceux-ci,
dans laquelle ledit programme spécial est enregistré d'une manière fragmentée, et ledit programme dé transfert, lorsqu'il est exécuté par lesdits moyens d'exécution de programme (9), restaure ledit programme spécial fragmenté et mémorise ledit programme spécial restauré dans lesdits moyens de mémoire (15c).

4. Procédé de traitement de signal pour décrypter un contenu crypté, délivré de l'extérieur, afin de restaurer ledit contenu crypté en contenu d'origine et d'envoyer ledit contenu d'origine, comportant :
une première étape de mémorisation consistant à mémoriser un programme spécial pour décrypter ledit contenu crypté et restaurer celui-ci en ledit contenu d'origine dans des moyens de mémoire (15c) ;
une seconde étape de mémorisation consistant à mémoriser des informations d'attribut dudit programme spécial mémorisé dans lesdits moyens de mémoire dans des moyens de mémoire d'attribut (15d) ;
une étape d'exécution de programme consistant à exécuter ledit programme spécial mémorisé dans lesdits moyens de mémoire (15c) pour décrypter ledit contenu crypté et restaurer celui-ci en ledit contenu d'origine ;
une étape de discrimination consistant à déterminer s'il a été accédé auxdits moyens de mémoire avec des informations indiquant un attribut dudit programme spécial généré à ladite étape d'exécution de programme, et à refuser un accès auxdits moyens de mémoire lorsqu'il a été accédé auxdits moyens de mémoire sans lesdites informations ; et
une étape d'entrée/sortie consistant à recevoir ledit programme spécial délivré de l'extérieur et ledit contenu crypté et à délivrer en sortie ledit contenu restauré,
dans lequel ladite étape de discrimination compare lesdites informations d'attribut mémorisées dans lesdits moyens de mémoire d'attribut auxdites informations indiquant ledit attribut dudit programme spécial généré à ladite étape. d'exécution de programme, et refuse un accès auxdits moyens de mémoire lorsqu'il n'existe pas de coïncidence.

5. Procédé de traitement de signal selon la revendication 4, dans lequel lorsque lesdits moyens de mémoire (15c) mémorisent ledit programme spécial, ladite étape d'exécution de programme efface lesdits moyens de mémoire et mémorise ensuite ledit programme spécial dans lesdits moyens de mémoire.

6. Utilisation dudit procédé de traitement de signal selon l'une quelconque des revendications 4 ou 5, pour reproduire des informations sur un support d'enregistrement d'informations dans lequel sont enregistrés ledit programme spécial et un programme de transfert pour transférer ledit programme spécial vers lesdits moyens de mémoire (15c) à mémoriser dans ceux-ci,
dans laquelle ledit programme spécial est enregistré d'une manière fragmentée, et ledit programme de transfert, lorsqu'il est exécuté à ladite étape d'exécution de programme, restaure ledit programme spécial fragmenté et mémorise ledit programme spécial restauré dans lesdits moyens de mémoire (15c).
